(19) Europäisches Patentamt
European Patent Office
Office européen des brevets

(11) **EP 3 073 496 B1**

(12) **FASCICULE DE BREVET EUROPEEN**

(45) Date de publication et mention
de la délivrance du brevet:
**27.11.2019 Bulletin 2019/48**

(21) Numéro de dépôt: **16162231.1**

(22) Date de dépôt: **24.03.2016**

(51) Int Cl.:
*H01C 13/02* (2006.01)          *H01C 1/14* (2006.01)
*H01C 7/04* (2006.01)          *G01K 7/16* (2006.01)
*G01K 7/22* (2006.01)          *G01K 7/24* (2006.01)

(54) **DISPOSITIF À RÉSISTANCE THERMOSENSIBLE**

VORRICHTUNG MIT WÄRMEEMPFINDLICHEM WIDERSTAND

DEVICE WITH HEAT-SENSITIVE RESISTANCE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.03.2015 FR 1552607**

(43) Date de publication de la demande:
**28.09.2016 Bulletin 2016/39**

(73) Titulaire: **COMMISSARIAT À L'ÉNERGIE
ATOMIQUE ET AUX
ÉNERGIES ALTERNATIVES
75015 Paris (FR)**

(72) Inventeur: **ALIANE, Abdelkader
38100 GRENOBLE (FR)**

(74) Mandataire: **Cabinet Beaumont
4, Place Robert Schuman
B.P. 1529
38025 Grenoble Cedex 1 (FR)**

(56) Documents cités:
**EP-A1- 0 844 466      WO-A1-2013/114293
GB-A- 1 287 930      US-A- 5 582 757**

**Description**

Domaine

La présente demande concerne le domaine des dispositifs à résistance thermosensible, notamment pour la réalisation de capteurs de température. La présente demande concerne également un procédé de fabrication de tels dispositifs à résistance thermosensible.

Exposé de l'art antérieur

Les résistances thermosensibles sont à coefficient de température négatif, et sont alors couramment appelées résistances NTC (sigle anglais pour "Negative Temperature Coefficient"), ou à coefficient de température positif, et sont alors couramment appelées résistances PTC (sigle anglais pour "Positive Temperature Coefficient"). Pour une résistance NTC, la valeur de la résistance diminue quand la température augmente. Pour une résistance PTC, la valeur de la résistance augmente quand la température augmente.

On connaît des dispositifs à résistance thermosensible dans lesquels des résistances thermosensibles sont disposées sur un substrat, par exemple en verre ou en plastique, notamment du polyéthylène de naphtalate (PEN) ou du polyéthylène de téréphtalate (PET). Ces résistances sont formées à partir de pâtes résistives thermosensibles disposées sur le substrat.

Un premier inconvénient de ces dispositifs est que le coût de fabrication des pâtes thermosensibles est généralement élevé.

Un deuxième inconvénient de ces dispositifs est que leur procédé de fabrication est polluant du fait que la fabrication des pâtes thermosensibles et leurs dépôts sur le substrat nécessitent l'utilisation de produits chimiques, notamment des solvants, qui peuvent être toxiques.

Un troisième inconvénient de ces dispositifs est qu'ils sont encombrants du fait que la surface du substrat occupée par les résistances est importante.

Dans le cas particulier de dispositifs dont le substrat est un film plastique souple, un quatrième inconvénient de ces dispositifs est que les pâtes thermosensibles peuvent se fissurer quand le film plastique est déformé, par exemple pour se conformer à une surface non plane, ce qui peut entraîner un disfonctionnement des dispositifs.

Il serait souhaitable de disposer d'un dispositif à résistance thermosensible et d'un procédé de fabrication d'un tel dispositif qui pallient au moins certains des inconvénients susmentionnés.

Les documents EP 0844466 et US 5582757 décrivent des capteurs de température.

Résumé

Ainsi, un mode de réalisation prévoit un dispositif comprenant un film de papier comprenant des fibres cellulosiques, une première face, et une deuxième face opposée à la première face ; et au moins une première résistance thermosensible à coefficient de température négatif, la première résistance thermosensible comportant une première électrode disposée sur la première face, une deuxième électrode disposée sur la deuxième face, les première et deuxième électrodes ayant au moins des premières parties en regard, la première résistance thermosensible comprenant, en outre, la portion du film de papier disposée entre les premières parties en regard, un additif choisi dans le groupe comprenant 2-2 diphényléthyl isocyanate, nitrophényl isocyanate, 1-adanatyl isocyanate, et cyanophényl isocyanate étant greffé aux fibres cellulosiques du film de papier.

Selon un mode de réalisation, le film de papier comprend au moins 40 % en poids de fibres cellulosiques.

Selon un mode de réalisation, la première résistance thermosensible comprend, en outre, une troisième électrode disposée sur la première face du film de papier, les deuxième et troisième électrodes ayant au moins des deuxièmes parties en regard, la première résistance thermosensible comprenant, en outre, la portion du film de papier disposée entre les deuxièmes parties en regard.

Selon un mode de réalisation, l'épaisseur du film de papier est comprise entre 50 et 300 $\mu$m.

Selon un mode de réalisation, le dispositif comprend au moins une deuxième résistance comportant un élément résistif sur la première face ou sur la deuxième face.

Selon un mode de réalisation, la première résistance thermosensible et la deuxième résistance sont montées en pont diviseur de tension.

Selon un mode de réalisation, le dispositif comprend un pont de Wheatstone comportant deux premières résistances thermosensibles et deux deuxièmes résistances.

Un mode de réalisation prévoit également un capteur de température comprenant un dispositif tel que défini précédemment.

Un mode de réalisation prévoit également un procédé de fabrication comprenant les étapes suivantes : a) prévoir un film de papier comprenant des fibres cellulosiques, une première face, et une deuxième face opposée à la première face ; b) former une première résistance thermosensible à coefficient de température négatif en formant une première électrode sur la première face, et une deuxième électrode sur la deuxième face, les première et deuxième électrodes ayant au moins des premières parties en regard, la première résistance thermosensible comprenant, en outre, la portion du film de papier disposée entre les premières parties en regard, le procédé comprenant en outre les étapes successives d) et e) suivantes entre l'étape a) et l'étape b) : d) tremper le film de papier dans une solution comportant au moins un additif choisi dans le groupe comprenant 2-2 diphényléthyl isocyanate, nitrophényl isocyanate, 1-adanatyl isocyanate, et cyanophényl isocyanate ; et e) greffer l'additif aux fibres cellulosiques du film de papier.

Selon un mode de réalisation, l'étape b) comprend, en outre, la formation d'une troisième électrode sur la première face du film de papier, les deuxième et troisième électrodes ayant au moins des deuxièmes parties en regard, la première résistance thermosensible comprenant, en outre, la portion du film de papier disposée entre les deuxièmes parties en regard.

Selon un mode de réalisation, le procédé comprend en outre l'étape suivante c) : c) former une deuxième résistance en déposant une pâte résistive sur la première face ou sur la deuxième face.

Selon un mode de réalisation, l'étape e) comprend l'exposition du film de papier à des impulsions d'un rayonnement ultraviolet.

Selon un mode de réalisation, les impulsions ont une durée comprise entre 0,5 et 2 ms et une fluence en énergie comprise entre 5 et 20 J/cm$^2$.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 est une vue en coupe schématique d'un mode de réalisation d'un dispositif comprenant une résistance NTC ;
la figure 2 est une vue en coupe schématique d'une variante de réalisation du dispositif de la figure 1 ;
la figure 3 représente une courbe de la variation en fonction de la température de la valeur de la résistance NTC de la figure 1 ;
les figures 4 et 5 représentent des courbes de la variation de la sensibilité en fonction de la température de deux modes de réalisation de la résistance NTC de la figure 1 ;
la figure 6 représente schématiquement un circuit d'un capteur de température comprenant un pont diviseur de tension ;
les figures 7A et 7B sont respectivement une vue de dessus et une vue en coupe schématiques d'un mode de réalisation du capteur de température de la figure 6 ;
la figure 8 représente schématiquement un circuit d'un capteur de température comprenant un pont de Wheatstone ;
les figures 9A, 9B et 9C sont respectivement une vue de dessus et des vues en coupe schématiques d'un mode de réalisation du capteur de température de la figure 8 ;
les figures 10A et 10B sont respectivement une vue de dessus et une vue en coupe schématiques d'une variante de réalisation du capteur de température représenté sur les figures 9A à 9C ; et
les figures 11A à 11C sont des vues en coupe schématiques illustrant des étapes d'un mode de réalisation d'un procédé de fabrication du capteur de température représenté sur les figures 7A et 7B.

Description détaillée

De mêmes éléments ont été désignés par de mêmes références aux différentes figures et, de plus, les diverses figures ne sont pas tracées à l'échelle. Dans la description qui suit, les termes "supérieur" et "inférieur" se réfèrent à l'orientation des éléments concernés dans les figures correspondantes. Sauf précision contraire, les termes "environ" et "sensiblement" signifient à 10 % près, de préférence à 5 % près. Dans la suite de la description, l'expression "film de papier" désigne un film comprenant plus de 40 % en poids de fibres cellulosiques.

On propose ici de former un dispositif comprenant une résistance thermosensible en utilisant un film de papier plutôt qu'un substrat en plastique ou en verre. En effet, l'inventeur a constaté que la valeur de la résistance électrique d'un film de papier décroît quand la température augmente. L'inventeur propose donc d'utiliser le film de papier pour former une résistance NTC du dispositif.

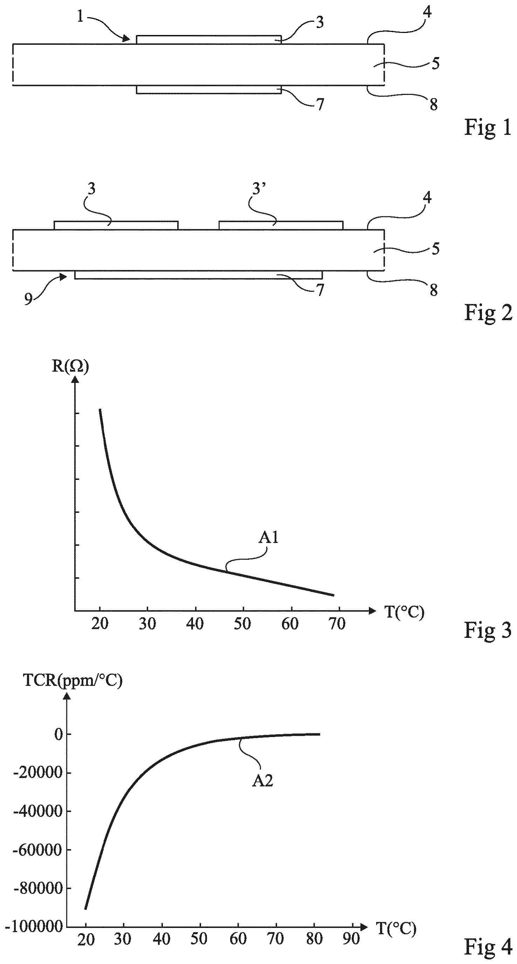

La figure 1 est une vue en coupe schématique d'un mode de réalisation d'un dispositif comprenant une résistance NTC 1. Le dispositif comprend une électrode 3 reposant sur la face supérieure 4 d'un film de papier 5 et une électrode 7 reposant sur la face inférieure 8 du film 5. Au moins une partie de l'électrode 3 est en regard d'au moins une partie de l'électrode 7. Dans le mode de réalisation représenté, la surface de l'électrode 3 en contact avec la face supérieure 4 du film 5 a la même aire que la surface de l'électrode 7 en contact avec la face inférieure 8 du film 5, et toute la surface de l'électrode 3 en contact avec le film 5 est en regard de la surface de l'électrode 7 en contact avec le film 5. La résistance NTC 1 est formée par les électrodes 3, 7, qui correspondent aux deux bornes de la résistance NTC 1, et par la portion du film de papier 5 s'étendant entre les parties en regard des électrodes 3 et 7.

A titre d'exemple, les surfaces en regard des électrodes 3 et 7 sont comprises entre 50 et 1000 $\mu m^2$. L'épaisseur des électrodes peut être comprise entre 10 et 300 nm, par exemple environ 100 nm. Chaque électrode 3, 7 comprend par exemple un métal choisi parmi le groupe comportant l'or, le cuivre, l'argent, le titane, et les alliages métalliques comprenant au moins l'un de ces métaux. Chaque électrode 3, 7 peut également être en un polymère électriquement conducteur, par exemple en poly(3,4-éthylènedioxythiophène) : (poly(styrène sulfonate), couramment désigné par le sigle PEDOT : PSS.

L'épaisseur du film de papier 5 peut être comprise entre 50 et 300 $\mu m$, par exemple de 200 $\mu m$. Le film de papier 5 peut être un film souple présentant un comportement flexible, c'est-à-dire qu'il peut sous l'action d'une force extérieure, se déformer, notamment se plier, sans se casser ou se déchirer. Le film de papier 5 est par exemple un film de papier commercialisé sous l'appellation PowerCoat par la société Arjowiggins. Le film de papier 5 peut comprendre, sur les faces supérieure et inférieure 4 et 8, des couches favorisant l'accroche des électrodes 3 et 7 sur ces faces 4 et 8. De telles couches d'accroche peuvent comprendre du 3-aminopropyl triméthyloxysilane.

La surface occupée sur le film de papier 5 par la résistance NTC 1, qui correspond à la surface de l'électrode 3, est réduite par rapport à la surface qui serait occupée par une résistance NTC de valeur équivalente comprenant une pâte thermosensible et des électrodes disposées sur un substrat.

Comme la résistance NTC 1 ne comprend pas de pâte thermosensible, la résistance NTC 1 a un coût de fabrication moins élevé qu'une résistance NTC de valeur équivalente comprenant une pâte thermosensible sur un substrat, et le procédé de fabrication de la résistance NTC 1 est moins polluant que celui d'une résistance NTC comprenant une pâte thermosensible.

Dans le cas particulier où le film de papier est souple et destiné à être déformé, la résistance NTC 1 a une meilleure tenue mécanique qu'une résistance NTC de valeur équivalente comprenant une pâte thermosensible sur un film souple.

La figure 2 est une vue en coupe schématique d'une variante de réalisation du dispositif de la figure 1. Dans cette variante, le dispositif comprend une résistance NTC 9 comportant une première résistance NTC en série avec une deuxième résistance NTC, les première et deuxième résistances ayant chacune une structure similaire à celle de la résistance NTC 1 de la figure 1. Par rapport à la résistance NTC 1, la résistance NTC 9 comprend une électrode supplémentaire 3' reposant sur la face supérieure 4 du film de papier 5. L'électrode 7 de la résistance NTC 9 a une première partie en regard de toute ou partie de l'électrode 3, et une deuxième partie en regard de toute ou partie de l'électrode 3' .

Ainsi, la résistance NTC 9 comprend une première résistance NTC formée par les parties en regard des électrodes 3 et 7, et par la portion du film de papier 5 s'étendant entre ces parties en regard. La résistance NTC 9 comprend, en outre, une deuxième résistance NTC formée par les parties en regard des électrodes 7 et 3', et par la portion du film de papier 5 s'étendant entre ces parties en regard.

Dans cette variante de réalisation, les deux bornes de la résistance NTC 9, qui correspondent aux électrodes 3 et 3', sont avantageusement disposées sur la même face 4 du film 5. Ceci simplifie l'accès à ces bornes. En outre, la résistance NTC 9 conserve les avantages de la résistance NTC 1 par rapport à une résistance comprenant une pâte thermosensible sur un substrat du fait que la résistance NTC 9 ne comprend pas de pâte thermosensible.

La figure 3 représente une courbe A1 de la variation de la valeur R, exprimée en ohms ($\Omega$) en échelle linéaire arbitraire, en fonction de la température T, exprimée en degrés Celsius (°C), de la résistance NTC 1. La courbe A1 montre que, pour des températures comprises entre 20 et 70 °C environ, la valeur de la résistance NTC 1 décroît quand la température augmente.

Le coefficient de variation d'une résistance thermosensible de valeur R avec la température T, ou TCR, est égal à $(1/R)*(dR/dT)$. Plus la valeur absolue du TCR est élevée, plus la sensibilité de la résistance est élevée.

La figure 4 représente une courbe A2 de la variation du TCR, exprimé en partie par million par degré Celsius (ppm/°C), en fonction de la température T, exprimée en degré Celsius (°C), de la résistance NTC 1. La courbe A2 est obtenue pour un film de papier 5 d'épaisseur 300 $\mu m$, et pour des électrodes 3 et 7 en argent et dont les surfaces en regard ont une aire de 10 $mm^2$.

La courbe A2 montre que, entre 20 et 70 °C environ, la valeur absolue du TCR diminue quand la température augmente. De manière générale, la plage d'utilisation préférentielle d'une résistance thermosensible peut correspondre à la plage de température pour laquelle la valeur absolue du TCR est supérieure à un seuil. Dans le cas de la résistance NTC 1 utilisée pour obtenir la courbe A2, le seuil peut être de $0,5*10^{-2}$ °C$^{-1}$, ce qui correspond à une plage d'utilisation préférentielle s'étendant de 20 à 40 °C environ.

Selon une variante de réalisation, des additifs peuvent être greffés aux fibres cellulosiques du film de papier 5 des résistances NTC 1 et 9. Par exemple, au moins un additif choisi dans le groupe comprenant 2-2 diphényléthyl isocyanate, nitrophényl isocyanate, 1-adamantyl isocyanate, et cyanophényl isocyanate, est greffé aux fibres cellulosiques du film de papier 5. Le film de papier peut alors comprendre entre 0,1 et 10 % en poids de l'additif.

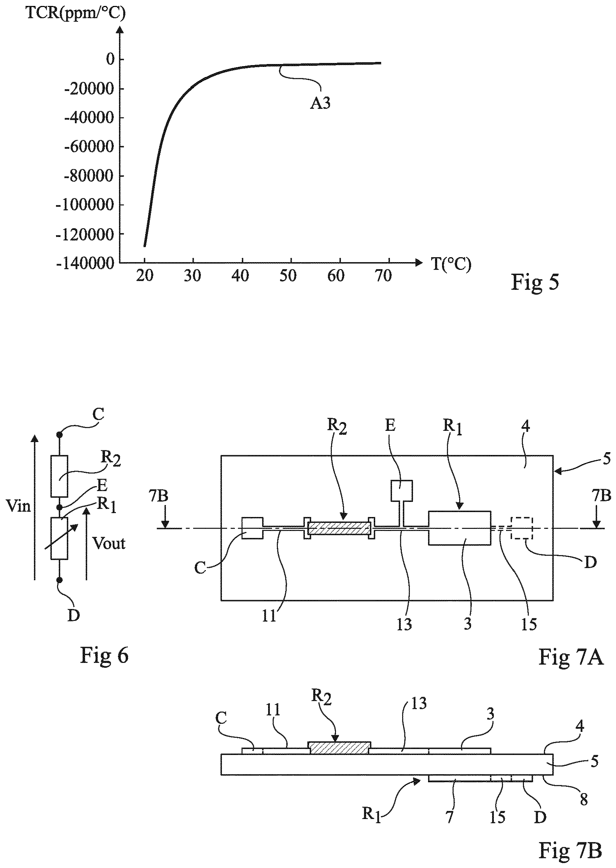

La figure 5 représente une courbe A3 de la variation du TCR en fonction de la température de la résistance NTC 1 dans le cas où un tel additif est greffé au film de papier 5. Plus particulièrement, la courbe A3 est obtenue avec une résistance NTC 1 similaire à la résistance NTC 1 utilisée pour obtenir la courbe A2 et comprenant, en outre, du nitrophényl isocyanate qui est greffé aux fibres cellulosiques du film de papier 5, le pourcentage en poids de l'additif dans le film de papier 5 étant d'environ 10 %.

De manière similaire à la courbe A2, la courbe A3 montre que la valeur absolue du TCR diminue quand la température augmente. En choisissant la même valeur de seuil de TCR que dans le cas de la courbe A2, la plage d'utilisation préférentielle de la résistance NTC 1 correspondant à la courbe A3 s'étend de 20 à 40 °C environ, et est sensiblement identique à celle de la résistance NTC 1 correspondant à la courbe A2. Toutefois, sur cette plage d'utilisation préférentielle et pour une valeur de température donnée, la valeur absolue du TCR de la courbe A3 est supérieure à celle de la courbe A2.

Ainsi, le greffage de l'un des additifs susmentionnés aux fibres cellulosiques du film de papier 5 de la résistance NTC 1 entraîne une augmentation de la sensibilité de la résistance NTC 1. En outre, l'étendue de la plage d'utilisation préférentielle est sensiblement la même en présence et en absence d'additifs.

Les résistances NTC 1 et 9 décrites en relation avec les figures 1 à 5 peuvent être utilisées pour réaliser un capteur de température comprenant une seule résistance NTC 1 ou 9, ou comprenant plusieurs résistances dont au moins une résistance NTC 1 ou 9, par exemple montées en pont diviseur de tension ou en pont de Wheatstone.

La figure 6 représente un circuit d'un capteur de température comprenant un pont diviseur de tension. Le pont diviseur de tension comprend, entre une borne C et une borne D, une résistance NTC $R_1$ montée en série avec une résistance $R_2$. On appelle E une borne entre les résistances $R_1$ et $R_2$. Dans la suite de la description, on utilise le même symbole pour désigner une résistance ou pour désigner la valeur de cette résistance.

En fonctionnement, la tension Vout mesurée entre les bornes E et D dépend de la tension Vin appliquée entre les bornes C et D selon la relation (1) suivante :

$$Vout = Vin * \frac{R_1}{R_1 + R_2} \qquad (1)$$

Du fait qu'une variation de température entraîne une variation de $R_1$, la valeur de la tension Vout mesurée dépend de la température.

La résistance $R_2$ peut avoir une valeur constante. La résistance $R_2$ peut également être une résistance NTC ou PTC. La résistance $R_2$ est par exemple une résistance thermosensible ayant une plage d'utilisation préférentielle au moins en partie commune avec la plage d'utilisation préférentielle de la résistance $R_1$. La sensibilité du capteur de température est alors augmentée sur cette plage d'utilisation commune. La résistance $R_2$ est par exemple une résistance thermosensible ayant une plage d'utilisation préférentielle au moins en partie distincte de celle de $R_1$. Ceci permet d'obtenir un capteur de température ayant une plage totale d'utilisation plus étendue que celle de la résistance $R_1$ ou de la résistance $R_2$.

Les figures 7A et 7B sont respectivement une vue de dessus et une vue en coupe schématiques représentant un mode de réalisation du capteur de température de la figure 6, la figure 7B étant une vue en coupe selon le plan 7B-7B de la figure 7A. Dans ce mode de réalisation, la résistance NTC $R_1$ a la même structure que la résistance NTC 1 de la figure 1 et la résistance $R_2$ est une résistance PTC.

La borne C et la borne E reposent sur la face supérieure 4 du film de papier 5. La borne D, représentée en traits pointillés en figure 7A, repose sur la face inférieure 8 du film 5. La résistance PTC $R_2$ repose sur la face supérieure du film 5. Une extrémité de la résistance PTC $R_2$ est reliée à la borne C par une piste conductrice 11, et l'autre extrémité de la résistance PTC $R_2$ est reliée par une piste conductrice 13 à la borne E et à l'électrode 3 de la résistance NTC $R_1$. Les pistes 11 et 13 reposent sur la face supérieure 4 du film de papier 5. Une piste conductrice 15, représentée en traits pointillés en figure 7A, repose sur la face inférieure 8 du film 5 et relie l'électrode 7 de la résistance NTC $R_1$ à la borne D.

A titre d'exemple, les pistes 11, 13 et 15, et les bornes C, D et E sont du même matériau et de la même épaisseur que les électrodes 3 et 7. La résistance PTC $R_2$ comprend par exemple une piste d'une pâte de noir de carbone dans une matrice d'un polymère thermoplastique. La résistance PTC $R_2$ peut avoir une longueur supérieure à 300 $\mu$m, une largeur supérieure à 150 $\mu$m et une épaisseur comprise entre 5 et 20 $\mu$m, par exemple de 10 $\mu$m. La résistance PTC $R_2$ peut avoir une plage d'utilisation préférentielle s'étendant de 40 à 90 °C. Dans le cas où la résistance NTC $R_1$ correspond à la résistance NTC 1 utilisé pour obtenir les courbes A1, A2 ou A3 décrites précédemment, la plage totale d'utilisation du capteur de température peut alors s'étendre de 20 à 90 °C.

Dans une variante de réalisation, la résistance NTC $R_1$ a la même structure que la résistance NTC 9. Dans ce cas, à la différence du capteur représenté sur les figures 7A et 7B, la piste conductrice 15 et la borne D reposent sur la face supérieure 4 du film 5, et la piste 15 relie la borne D à l'électrode 3' plutôt qu'à l'électrode 7. Ainsi, toutes les bornes C, D, et E sont formées sur la face supérieure du film 5. Il en résulte que l'accès aux bornes C, D et E pour appliquer la tension Vin et pour mesurer la tension Vout est simplifié par rapport au capteur représenté sur les figures 7A et 7B.

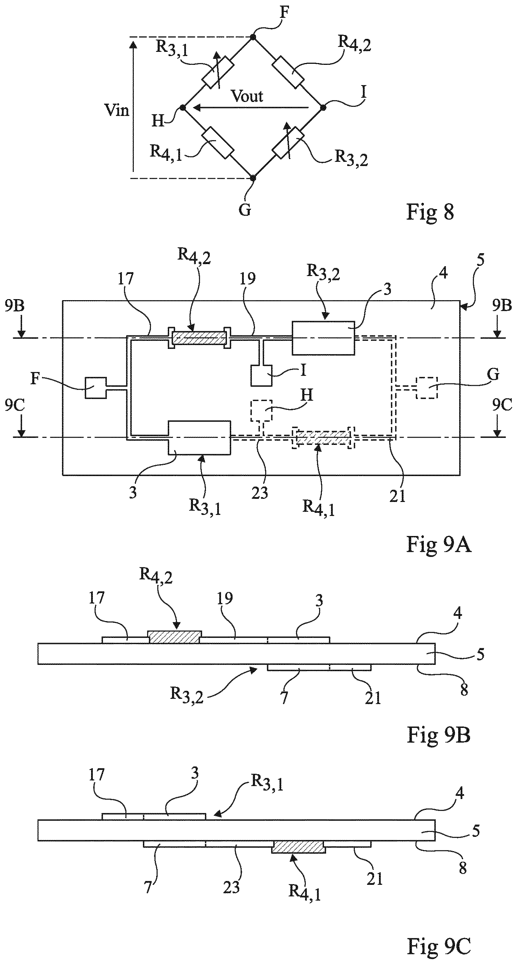

La figure 8 représente un circuit d'un capteur de température comprenant un pont de Wheatstone.

Le pont de Wheatstone comprend, entre des bornes F et G, une première branche comprenant une résistance NTC $R_{3,1}$ montée en série avec une résistance $R_{4,1}$, et, en parallèle avec la première branche, une deuxième branche comprenant une résistance $R_{4,2}$ montée en série avec une résistance NTC $R_{3,2}$. Les points milieu des première et deuxième branches sont désignés par les références respectives H et I.

En fonctionnement, une tension de polarisation Vin est appliquée entre les bornes F et G, et une tension Vout est mesurée entre les bornes H et I. Quand les résistances NTC $R_{3,1}$ et $R_{3,2}$ ont une même valeur $R_3$, et les résistances $R_{4,1}$ et $R_{4,2}$ ont une même valeur $R_4$, la tension Vout dépend de la tension Vin selon la relation (2) suivante :

$$Vout = Vin * \left(\frac{R_4 - R_3}{R_4 + R_3}\right) \qquad (2)$$

Du fait qu'une variation de température entraîne une variation de $R_3$, la tension Vout mesurée dépend de la température.

Les résistances $R_{4,1}$, $R_{4,2}$ peuvent avoir des valeurs constantes, correspondre à des résistances NTC, ou correspondre à des résistances PTC.

Les figures 9A à 9C représentent schématiquement un mode de réalisation du capteur de température de la figure 8, la figure 9A étant une vue de dessus et les figures 9B et 9C étant des vues en coupe selon les plans respectifs 9B-9B et 9C-9C de la figure 9A. Dans ce mode de réalisation, chaque résistance NTC $R_{3,1}$, $R_{3,2}$ a la même structure que la résistance NTC 1 de la figure 1, et chaque résistance $R_{4,1}$, $R_{4,2}$ a la même structure que la résistance PTC $R_2$ des figures 7A et 7B.

Les bornes F et I reposent sur la face supérieure 4 du film de papier 5, et les bornes G et H reposent sur la face inférieure 8 du film 5. La résistance PTC $R_{4,2}$ repose sur la face supérieure 4 du film 5 et la résistance PTC $R_{4,1}$ repose sur la face inférieure 8 du film 5. Une piste conductrice 17 repose sur la face supérieure 4 du film de papier 5 et relie entre elles une extrémité de la résistance PTC $R_{4,2}$, la borne F, et l'électrode 3 de la résistance NTC $R_{3,1}$. Une piste conductrice 19 repose sur la face supérieure 4 du film de papier 5 et relie entre elles l'autre extrémité de la résistance PTC $R_{4,2}$, la borne I, et l'électrode 3 de la résistance NTC $R_{3,2}$. Une piste conductrice 21 repose sur la face inférieure 8 du film 5 et relie entre elles une extrémité de la résistance PTC $R_{4,1}$, la borne G, et l'électrode 7 de la résistance NTC $R_{3,2}$. Une piste conductrice 23 repose sur la face inférieure 8 du film 5 et relie entre elles l'autre extrémité de la résistance PTC $R_{4,1}$, la borne H, et l'électrode 7 de la résistance NTC $R_{3,1}$. A titre d'exemple, les pistes conductrices 17, 19, 21 et 23, et les bornes F, G, H et I sont du même matériau et de la même épaisseur que les électrodes 3 et 7.

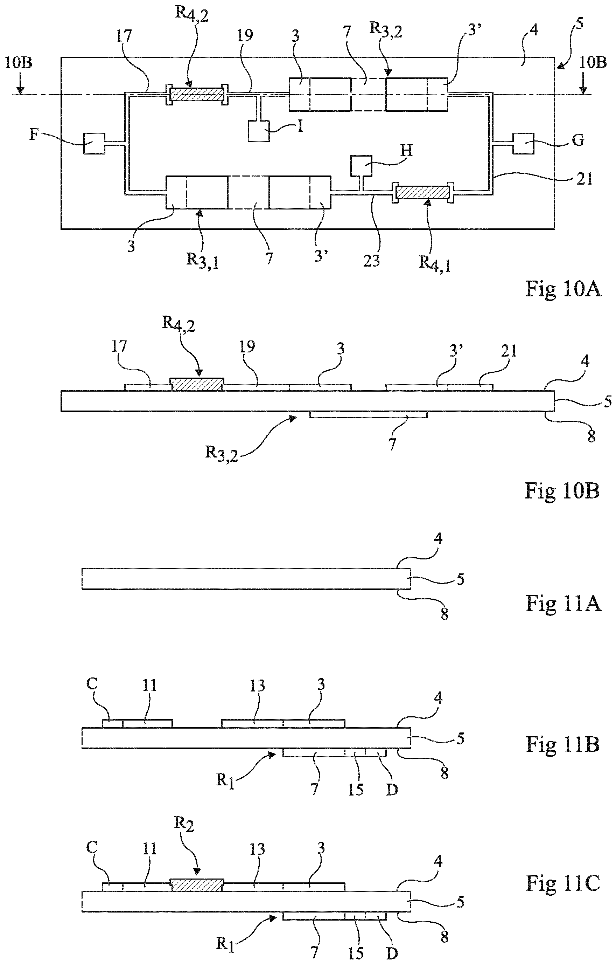

Les figures 10A et 10B sont respectivement une vue de dessus et une vue en coupe schématiques d'une variante de réalisation du capteur de température représenté sur les figures 9A à 9C, la figure 10B étant en vue en coupe selon le plan 10B-10B de la figure 10A. Dans cette variante, à la différence du capteur de température représenté sur les figures 9A à 9C, chaque résistance NTC $R_{3,1}$ et $R_{3,2}$ a la même structure que la résistance NTC 9 de la figure 2. De plus, la résistance PTC $R_{4,1}$, les bornes G et H, et les pistes 21 et 23 reposent sur la face supérieure 4 du film 5. Les pistes 21 et 23 sont alors reliées aux électrodes 3' et non pas aux électrodes 7 des résistances NTC $R_{3,1}$ et $R_{3,2}$.

Ainsi, les résistances PTC $R_{4,1}$, $R_{4,2}$, et les bornes F, G, H, et I reposent toutes sur la face supérieure 4 du film 5. Il en résulte que les résistances PTC $R_{4,1}$, $R_{4,2}$ peuvent être formées simultanément. En outre, l'accès aux bornes F, G, H, et I pour appliquer la tension Vin et pour mesurer la tension Vout est simplifié par rapport au cas du capteur de température représenté sur les figures 9A à 9C.

Les figures 11A à 11C sont des vues en coupe schématiques représentant des structures obtenues à des étapes successives d'un mode de réalisation d'un procédé de fabrication du capteur de température représenté sur les figures 7A et 7B.

La figure 11A représente une structure obtenue après un traitement pour greffer aux fibres cellulosiques du film de papier 5 au moins un additif choisi dans le groupe comprenant 2-2 diphényléthyl isocyanate, nitrophényl isocyanate, 1-adanatyl isocyanate, et cyanophényl isocyanate. Le traitement comprend les étapes successives suivantes :

- tremper le film 5 dans une solution comprenant un solvant et l'additif de sorte que l'additif pénètre dans tout le volume du film de papier 5 ;
- sécher le film 5, par exemple à l'air libre, pour évaporer le solvant ; et
- greffer, ou fixer, l'additif aux fibres cellulosiques du film 5, par exemple en exposant le film à des impulsions d'un rayonnement ultraviolet.

A titre d'exemple, le solvant est du toluène. La solution comprend par exemple de 5 à 10 % en poids de l'additif. Le film est trempé par exemple entre 1 et 5 minutes dans la solution. Les impulsions d'ultraviolet ont par exemple une durée comprise entre 0,5 et 2 ms, et par exemple une fluence en énergie comprise entre 5 et 20 J/cm$^2$. Les impulsions peuvent être émises à l'aide de l'équipement commercialisé sous l'appellation PulseForge par la société Novacentrix ou sous l'appellation Sinteron 2000 par la société Xenon Corporation.

A titre de variante, le traitement pour greffer l'additif aux fibres cellulosiques du film de papier 5 peut ne pas être réalisé.

Une couche d'accroche peut être déposée sur les faces supérieure et inférieure 4 et 8 du film 5 pour favoriser l'adhérence des éléments qui seront formés ultérieurement sur ces faces 4 et 8. Ce dépôt peut être un dépôt physique en phase vapeur, par exemple de 3-aminopropyle triméthoxysilane.

La figure 11B représente la structure obtenue après avoir formé, par exemple simultanément, la borne C, la borne E (non visible en figure 11B), les pistes conductrices 11 et 13, et l'électrode 3 sur la face supérieure 4 du film 5, et après avoir formé, par exemple simultanément, la borne D, la piste conductrice 15, et l'électrode 7 sur la face inférieure 8 du film 5.

Selon le matériau composant les éléments formés sur les faces supérieure et inférieure 4 et 8 du film 5, le procédé de formation peut correspondre à un procédé dit additif, par exemple par impression directe d'une composition fluide ou visqueuse comprenant ces éléments aux emplacements souhaités, par exemple par impression par jet d'encre, héliographie, sérigraphie, flexographie, revêtement par pulvérisation (en anglais spray coating) ou dépôt de gouttes (en anglais drop-casting). Selon le matériau composant les éléments formés sur les faces supérieure et inférieure 4 et 8 du film 5, le procédé de formation peut correspondre à un procédé dit soustractif, dans lequel le matériau composant ces éléments est déposé sur la totalité de la face supérieure 4 et/ou de la face inférieure 8 du film 5, et dans lequel les portions non utilisées sont ensuite retirées, par exemple par photolithographie ou ablation laser. Le dépôt sur la face 4 et/ou la face 8 du film 5 peut être réalisé par exemple par voie liquide, par pulvérisation cathodique ou par évaporation. Il peut s'agir notamment de procédés du type dépôt à la tournette, revêtement par pulvérisation, héliographie, revêtement par filière (en anglais slot-die coating), revêtement à la lame (en anglais blade-coating), flexographie ou sérigraphie. Selon le procédé de dépôt mis en oeuvre, une étape de séchage des matériaux déposés peut être prévue.

La figure 11C représente la structure obtenue après la formation sur la face supérieure 4 du film 5 de la résistance PTC $R_2$ en contact avec les pistes 11 et 13. Le procédé de formation de la résistance PTC $R_2$ peut correspondre à un procédé additif tel que décrit précédemment, notamment par jet d'encre, sérigraphie ou revêtement par pulvérisation. Le procédé de formation de la résistance PTC $R_2$ peut, en outre, correspondre à un procédé soustractif tel que décrit précédemment.

Un avantage du mode de réalisation du procédé de fabrication décrit en relation avec les figures 11A à 11C est qu'il n'est pas nécessaire de déposer une pâte thermosensible et d'effectuer un recuit de cette pâte pour former la résistance NTC $R_1$. Il en résulte que le procédé est plus simple, moins polluant et moins coûteux à mettre en oeuvre qu'un procédé de fabrication comprenant la formation d'une résistance NTC à partir d'une pâte thermosensible.

On comprend qu'un grand nombre de capteurs de température, par exemple plusieurs milliers, peuvent être fabriqués simultanément sur un même film de papier 5, le film 5 étant ensuite découpé pour obtenir des capteurs de température individuels.

Bien que l'on ait décrit en relation avec les figures 11A à 11C un procédé de fabrication dans le cas où la résistance $R_1$ a la même structure que la résistance NTC 1 de la figure 1, une électrode supplémentaire 3' peut être formée à l'étape décrite en relation avec la figure 11B pour que la résistance NTC $R_1$ ait la structure de la résistance NTC 9 de la figure 2.

Des modes de réalisation particuliers ont été décrits en relation avec les figures 1 à 11C. Diverses variantes et modifications apparaîtront à l'homme de l'art. En particulier, bien que l'on ait décrit l'utilisation d'une résistance NTC dans des capteurs de température, on comprend qu'une telle résistance peut être utilisée dans d'autres types de circuits réalisés sur un film de papier. De plus, les résistances PTC pourront être formées à partir d'autres pâtes thermosensibles que des pâtes comprenant du noir de carbone. En outre, le nombre et l'ordre des étapes du procédé décrit précédemment pourront être modifiés par l'homme de métier. Par exemple, l'ordre de formation des pistes, des électrodes et des bornes sur les faces inférieure et supérieure du film peut être modifié.

Divers modes de réalisation avec diverses variantes ont été décrits ci-dessus. On notera que l'homme de l'art pourra combiner divers éléments de ces divers modes de réalisation et variantes sans faire preuve d'activité inventive.

**Revendications**

1. Dispositif comprenant :

    un film de papier (5) comprenant des fibres cellulosiques, une première face (4), et une deuxième face (8) opposée à la première face ; et
au moins une première résistance thermosensible (1 ; 9 ; $R_1$ ; $R_{3,1}$, $R_{3,2}$) à coefficient de température négatif, la première résistance thermosensible comportant une première électrode (3) disposée sur la première face, une deuxième électrode (7) disposée sur la deuxième face, les première et deuxième électrodes ayant au moins des premières parties en regard, la première résistance thermosensible comprenant, en outre, la portion du film de papier disposée entre les premières parties en regard,
**caractérisé en ce qu'**un additif choisi dans le groupe comprenant 2-2 diphényléthyl isocyanate, nitrophényl isocyanate, 1-adanatyl isocyanate, et cyanophényl isocyanate est greffé aux fibres cellulosiques du film de papier (5).

2. Dispositif selon la revendication 1, dans lequel le film de papier (5) comprend au moins 40 % en poids de fibres cellulosiques.

3. Dispositif selon la revendication 1 ou 2, dans lequel la première résistance thermosensible (9) comprend, en outre, une troisième électrode (3') disposée sur la première face (4) du film de papier (5), les deuxième et troisième électrodes (7, 3') ayant au moins des deuxièmes parties en regard, la première résistance thermosensible comprenant, en outre, la portion du film de papier disposée entre les deuxièmes parties en regard.

4. Dispositif selon l'une quelconque des revendications 1 à 3, dans lequel l'épaisseur du film de papier (5) est comprise entre 50 et 300 $\mu$m.

5. Dispositif selon l'une quelconque des revendications 1 à 4, comprenant au moins une deuxième résistance ($R_2$ ; $R_{4,1}$, $R_{4,2}$) comportant un élément résistif sur la première face (4) ou sur la deuxième face (8).

6. Dispositif selon la revendication 5, dans lequel la première résistance thermosensible ($R_1$) et la deuxième résistance ($R_2$) sont montées en pont diviseur de tension.

7. Dispositif selon la revendication 5, comprenant un pont de Wheatstone comportant deux premières résistances thermosensibles ($R_{3,1}$, $R_{3,2}$) et deux deuxièmes résistances ($R_{4,1}$, $R_{4,2}$).

8. Capteur de température comprenant un dispositif selon l'une quelconque des revendications 1 à 7.

9. Procédé de fabrication comprenant les étapes suivantes :

a) prévoir un film de papier (5) comprenant des fibres cellulosiques, une première face (4), et une deuxième face (8) opposée à la première face ;
b) former une première résistance thermosensible (1 ; 9 ; $R_1$ ; $R_{3,1}$, $R_{3,2}$) à coefficient de température négatif en formant une première électrode (3) sur la première face, et une deuxième électrode (7) sur la deuxième face, les première et deuxième électrodes ayant au moins des premières parties en regard, la première résistance thermosensible comprenant, en outre, la portion du film de papier disposée entre les premières parties en regard,

**caractérisé en ce qu'**il comprend en outre les étapes successives d) et e) suivantes entre l'étape a) et l'étape b) :

d) tremper le film de papier (5) dans une solution comportant au moins un additif choisi dans le groupe comprenant 2-2 diphényléthyl isocyanate, nitrophényl isocyanate, 1-adanatyl isocyanate, et cyanophényl isocyanate ; et
e) greffer l'additif aux fibres cellulosiques du film de papier.

10. Procédé selon la revendication 9, dans lequel l'étape b) comprend, en outre, la formation d'une troisième électrode (3') sur la première face (4) du film de papier (5), les deuxième et troisième électrodes (7, 3') ayant au moins des deuxièmes parties en regard, la première résistance thermosensible (9) comprenant, en outre, la portion du film de papier disposée entre les deuxièmes parties en regard.

11. Procédé selon la revendication 9 ou 10, comprenant en outre l'étape suivante c) :
c) former une deuxième résistance ($R_2$ ; $R_{4,1}$, $R_{4,2}$) en déposant une pâte résistive sur la première face (4) ou sur la deuxième face (8).

12. Procédé selon l'une quelconque des revendications 9 à 11, dans lequel l'étape e) comprend l'exposition du film de papier (5) à des impulsions d'un rayonnement ultraviolet.

13. Procédé selon la revendication 12, dans lequel les impulsions ont une durée comprise entre 0,5 et 2 ms et une fluence en énergie comprise entre 5 et 20 J/cm$^2$.

**Patentansprüche**

1. Eine Vorrichtung, die Folgendes aufweist:

einen Papierfilm (5), der Zellulosefasern, eine erste Oberfläche (4) und eine zweite Oberfläche (8) entgegengesetzt zu der ersten Oberfläche aufweist; und
wenigstens einen ersten wärmeempfindlichen Widerstand (1; 9; $R_1$; $R_{3,1}$, $R_{3,2}$) mit negativem Temperaturkoeffizienten, wobei der erste wärmeempfindliche Widerstand eine erste Elektrode (3), die auf der ersten Oberfläche angeordnet ist, und eine zweite Elektrode (7), die auf der zweiten Oberfläche angeordnet ist, aufweist, wobei die ersten und die zweiten Elektroden wenigstens erste Teile aufweisen, die zueinander weisen, wobei der erste wärmeempfindliche Widerstand ferner den Teil des Papierfilms aufweist, der zwischen den ersten Teilen, die zueinander weisen, angeordnet ist,
**dadurch gekennzeichnet, dass** ein Additiv, das ausgewählt ist aus der Gruppe, die 2-2-Diphenylethylisocyanat, Nitrophenylisocyanat, 1-Athanatylisocyanat und Cyanophenylisocyanat, das an den Zellulosefasern des Papierfilms (5) aufgepfropft ist, aufweist.

2. Vorrichtung nach Anspruch 1, wobei die Papierfilm (5) wenigstens 40 Gew.-% Zellulosefasern aufweist.

3. Vorrichtung nach Anspruch 1 oder 2, wobei der erste wärmeempfindliche Widerstand (9) ferner eine dritte Elektrode (3') aufweist, die auf der ersten Oberfläche (4) des Papierfilms (5) angeordnet ist, wobei die zweiten und dritten Elektroden (7, 3') wenigstens zweite Teile aufweisen, die zueinander weisen, wobei der erste wärmeempfindliche Widerstand ferner den Teil des Papierfilms aufweist, der zwischen den zweiten Teilen, die zueinander weisen, angeordnet ist.

4. Vorrichtung nach einem der Ansprüche 1 bis 3, wobei die Dicke des Papierfilms (5) im Bereich von 50 bis 300 μm liegt.

5. Vorrichtung nach einem der Ansprüche 1 bis 4, die wenigstens einen zweiten Widerstand ($R_2$; $R_{4,1}$, $R_{4,2}$) aufweist, der ein Widerstandselement auf der ersten Oberfläche (4) oder auf der zweiten Oberfläche (8) aufweist.

6. Vorrichtung nach Anspruch 5, wobei der erste wärmeempfindliche Widerstand ($R_1$) und der zweite Widerstand ($R_2$) als Spannungsteilerbrücke angeordnet sind.

7. Vorrichtung nach Anspruch 5, die eine Wheatstone-Brücke mit zwei ersten wärmeempfindlichen Widerständen ($R_{3,1}$, $R_{3,2}$) und zwei zweiten Widerständen ($R_{4,1}$, $R_{4,2}$) aufweist.

8. Temperatursensor, der die Vorrichtung nach einem der Ansprüche 1 bis 7 aufweist.

9. Herstellungsverfahren, das die folgenden Schritte aufweist:

a) Vorsehen eines Papierfilms (5), der Zellulosefasern, eine erste Oberfläche (4) und eine zweite Oberfläche (8) entgegengesetzt zu der ersten Oberfläche aufweist;
b) Ausbilden eines ersten wärmeempfindlichen Widerstandes (1; 9; $R_1$; $R_{3,1}$, $R_{3,2}$) mit negativem Temperaturkoeffizienten durch Ausbilden einer ersten Elektrode (3) auf der ersten Oberfläche und einer zweiten Elektrode (7) auf der zweiten Oberfläche, wobei die ersten und zweiten Elektroden wenigstens erste Teile aufweisen, die zueinander weisen, wobei der erste wärmeempfindliche Widerstand ferner den Teil des Papierfilms aufweist, der zwischen den ersten Teilen, die zueinander weisen, angeordnet ist,

**dadurch gekennzeichnet, dass** es ferner die folgenden aufeinanderfolgenden Schritte d) und e) zwischen Schritt a) und Schritt b) aufweist:

d) Eintauchen des Papierfilms (5) in eine Lösung, das wenigstens ein Additiv aufweist, das ausgewählt ist aus der Gruppe, die 2-2-Diphenylethylisocyanat, Nitrophenylisocyanat, 1-Athanatylisocyanat und Cyanophenylisocyanat aufweist; und
e) Pfropfen des Additivs an die Zellulosefasern des Papierfilms.

**10.** Verfahren nach Anspruch 9, wobei Schritt b) ferner das Ausbilden einer dritten Elektrode (3') auf der ersten Oberfläche (4) des Papierfilms (5) aufweist, wobei die zweiten und dritten Elektroden (7, 3') wenigstens zweite Teile aufweisen, die zueinander weisen, wobei der erste wärmeempfindliche Widerstand (9) ferner den Teil des Papierfilms aufweist, der zwischen den zweiten Teilen, die zueinander weisen, angeordnet ist.

**11.** Verfahren nach Anspruch 9 oder 10, das ferner Schritt c) aufweist:
c) Ausbilden eines zweiten Widerstandes ($R_2$; $R_{4,1}$, $R_{4,2}$) durch Abscheiden einer Widerstandspaste auf der ersten Oberfläche (4) oder auf der zweiten Oberfläche (8).

**12.** Verfahren nach einem der Ansprüche 9 bis 11, wobei Schritt e) das Aussetzen des Papierfilms (5) gegenüber Impulsen einer ultravioletten Strahlung aufweist.

**13.** Verfahren nach Anspruch 12, wobei die Impulse eine Dauer im Bereich von 0,5 bis 2 ms und eine Energiefluenz im Bereich von 5 bis 20 J/cm$^2$ aufweisen.

**Claims**

**1.** A device comprising:

a paper film (5) comprising cellulose fibers, a first surface (4), and a second surface (8) opposite to the first surface; and
at least one first heat-sensitive resistor (1; 9; $R_1$; $R_{3,1}$, $R_{3,2}$) of negative temperature coefficient, the first heat-sensitive resistor comprising a first electrode (3) arranged on the first surface, a second electrode (7) arranged on the second surface, the first and second electrodes having at least first portions facing each other, the first heat-sensitive resistor further comprising the portion of the paper film arranged between the first portions facing each other,
**characterized in that** an additive selected from the group comprising 2-2 diphenylethyl isocyanate, nitrophenyl isocyanate, 1-adanatyl isocyanate, and cyanophenyl isocyanate is grafted to the cellulose fibers of the paper film (5).

**2.** The device of claim 1, wherein the paper film (5) comprises at least 40% by weight of cellulose fibers.

**3.** The device of claim 1 or 2, wherein the first heat-sensitive resistor (9) further comprises a third electrode (3') arranged on the first surface (4) of the paper film (5), the second and third electrodes (7, 3') having at least second portions facing each other, the first heat-sensitive resistor further comprising the portion of the paper film arranged between the second portions facing each other.

**4.** The device of any of claims 1 to 3, wherein the thickness of the paper film (5) is in the range from 50 to 300 $\mu$m.

**5.** The device of any of claims 1 to 4, comprising at least one second resistor ($R_2$; $R_{4,1}$, $R_{4,2}$) comprising a resistive element on the first surface (4) or on the second surface (8).

**6.** The device of claim 5, wherein the first heat-sensitive resistor ($R_1$) and the second resistor ($R_2$) are assembled as a voltage-dividing bridge.

**7.** The device of claim 5, comprising a Wheatstone bridge comprising two first heat-sensitive resistors ($R_{3,1}$, $R_{3,2}$) and two second resistors ($R_{4,1}$, $R_{4,2}$).

**8.** A temperature sensor comprising the device of any of claims 1 to 7.

**9.** A manufacturing method comprising the steps of:

a) providing a paper film (5) comprising cellulose fibers, a first surface (4), and a second surface (8) opposite to the first surface;
b) forming a first heat-sensitive resistor (1; 9; $R_1$; $R_{3,1}$, $R_{3,2}$) of negative temperature coefficient by forming a first electrode (3) on the first surface, and a second electrode (7) on the second surface, the first and second electrodes having at least first portions facing each other, the first heat-sensitive resistor further comprising the portion of the paper film arranged between the first portions facing each other,

**characterized in that** it further comprises the following successive steps d) and e), between step a) and step b):

d) dipping the paper film (5) into a solution comprising at least one additive selected from the group comprising 2-2 diphenylethyl isocyanate, nitrophenyl isocyanate, 1-adanatyl isocyanate, and cyanophenyl isocyanate; and
e) grafting the additive to the cellulose fibers of the paper film.

10. The method of claim 9, wherein step b) further comprises forming a third electrode (3') on the first surface (4) of the paper film (5), the second and third electrodes (7, 3') having at least second portions facing each other, the first heat-sensitive resistor (9) further comprising the portion of the paper film arranged between the second portions facing each other.

11. The method of claim 9 or 10, further comprising step c) of:
c) forming a second resistor ($R_2$; $R_{4,1}$, $R_{4,2}$) by depositing a resistive paste on the first surface (4) or on the second surface (8).

12. The method of any of claims 9 to 11, wherein step e) comprises exposing the paper film (5) to pulses of an ultraviolet radiation.

13. The method of claim 12, wherein the pulses have a duration in the range from 0.5 to 2 ms and an energy fluence in the range from 5 to 20 J/cm$^2$.

Fig 1

Fig 2

Fig 3

Fig 4

Fig 5

Fig 6

Fig 7A

Fig 7B

Fig 8

Fig 9A

Fig 9B

Fig 9C

Fig 10A

Fig 10B

Fig 11A

Fig 11B

Fig 11C

**EP 3 073 496 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0844466 A

- US 5582757 A